# EUROPÄISCHE PATENTSCHRIFT

(11) **EP 4 051 528 B1**
(45) Veröffentlichungstag und Bekanntmachung des Hinweises auf die Patenterteilung: **06.03.2024**
(21) Anmeldenummer: 20799653.9
(22) Anmeldetag: 26.10.2020
(51) Int. Cl.: B60N 2/90, B60N 2/02

(54) **GETRIEBEANORDNUNG FÜR EINE SPINDELANTRIEBSANORDNUNG, SPINDELANTRIEBSANORDNUNG UND FAHRZEUGSITZ**
GEARING ARRANGEMENT FOR A SPINDLE DRIVE ARRANGEMENT, SPINDLE DRIVE ARRANGEMENT, AND VEHICLE SEAT
AGENCEMENT D'ENGRENAGE DESTINÉ À UN AGENCEMENT D'ENTRAÎNEMENT DE BROCHE, AGENCEMENT D'ENTRAÎNEMENT DE BROCHE ET SIÈGE DE VÉHICULE

(30) Priorität: 01.11.2019 DE 102019216902; 24.03.2020 DE 102020108069
(43) Veröffentlichungstag der Anmeldung: 07.09.2022
(73) Patentinhaber: Adient US LLC, Plymouth, MI 48170 (US)
(72) Erfinder: STANIC, Ivica, 41542 Dormagen (DE)
(74) Vertreter: Liedhegener, Ralf
(86) Internationale Anmeldenummer: PCT/EP2020/079985
(87) Internationale Veröffentlichungsnummer: WO 2021/083817

(56) Entgegenhaltungen:
- EP-A1- 3 523 160
- DE-A1-102018 204 195
- DE-U1- 29 924 108

## Beschreibung

Die Erfindung betrifft eine Getriebeanordnung für eine Spindelantriebsanordnung, eine Spindelantriebsanordnung und einen Fahrzeugsitz.

### Stand der Technik

Aus dem Stand der Technik sind Spindelantriebsanordnungen, beispielsweise für einen Verstellmechanismus eines Fahrzeugs, welcher zum Beispiel für eine elektrische Höhenverstellung eines Fahrzeugsitzes verwendet wird, allgemein bekannt. Derartige Spindelantriebsanordnungen umfassen einen Elektromotor und eine Getriebeanordnung, mittels welcher eine Drehbewegung des Elektromotors auf eine Gewindespindel der Spindelantriebsanordnung übertragen wird. Durch die Spindelantriebsanordnung wird es ermöglicht, eine rotatorische Bewegung des Elektromotors über die Getriebeanordnung in eine translatorische Bewegung umzuwandeln.

Die DE 10 2018 204 195 A1 offenbart einen Spindelantrieb, mit einem mit einem Antriebsmotor verbundenen Getriebegehäuse, wobei das Getriebegehäuse einen Gehäusegrundkörper zur Befestigung an dem Antriebsmotor aufweist, mit an gegenüberliegenden Seiten des Gehäusegrundkörpers angeordneten Anschlussflächen mit jeweils einem Lochbild zum Verbinden des Gehäusegrundkörpers mit jeweils einem Gehäusedeckel mittels Befestigungsschrauben. Die Lochbilder in dem Gehäusegrundkörper weisen in gleichmäßigen Winkelabständen zueinander angeordnete Bohrungen für die Befestigungsschrauben auf. Dadurch sind die beiden Gehäusedeckel austauschbar und in unterschiedlichen Winkelpositionen im Bereich der beiden Anschlussflächen am Gehäusegrundkörper befestigbar.

### Aufgabe

Aufgabe der vorliegenden Erfindung ist es, eine gegenüber dem Stand der Technik verbesserte Getriebeanordnung für eine Spindelantriebsanordnung, eine gegenüber dem Stand der Technik verbesserte Spindelantriebsanordnung und einen gegenüber dem Stand der Technik verbesserten Fahrzeugsitz anzugeben.

### Lösung

Die Aufgabe wird erfindungsgemäß durch eine Getriebeanordnung gemäss Anspruch 1 gelösst.

Vorteilhafterweise sind zwei Gruppen solcher Aufnahmeöffnungen vorgesehen, d. h. die Aufnahmeöffnungen der einen Gruppe sind vorteilhafterweise rechtwinklig und/oder schräg zu den Aufnahmeöffnungen der anderen Gruppe ausgerichtet, d. h. insbesondere nicht parallel, sondern insbesondere in einem Winkel zueinander ausgerichtet, welcher größer ist als 0° und bis zu 90° betragen kann, insbesondere 90° beträgt. Dadurch wird es ermöglicht, den Getriebehalter in zwei verschiedenen Ausrichtungen, beispielsweise entweder horizontal oder vertikal ausgerichtet, am anderen Bauteil, insbesondere am Fahrzeugsitz, zu befestigen. Somit kann dieser Getriebehalter beispielsweise für verschiedene Varianten von Fahrzeugsitzen und/oder für verschiedene Varianten der Spindelantriebsanordnung, welche sich beispielsweise in einem jeweils verwendeten Elektromotor für die Spindelantriebsanordnung und/oder in einer jeweils verwendeten Gewindespindel für die Spindelantriebsanordnung unterscheiden, verwendet werden. Es sind somit nicht für jede dieser Varianten der Spindelantriebsanordnung und/oder für jede dieser Varianten des Fahrzeugsitzes separat und spezifisch ausgebildete Getriebehalter erforderlich.

Die beiden oben erwähnten Komponenten der Getriebeanordnung, d. h. das Getriebegehäuse und der Getriebehalter, weisen vorteilhafterweise korrespondierende Verbindungselemente zur Verbindung des Getriebegehäuses mit dem Getriebehalter auf. Dabei sind die Verbindungselemente der einen Komponente, d. h. des Getriebegehäuses oder des Getriebehalters, jeweils als ein Bolzen und die Verbindungselemente der anderen Komponente, d. h. des Getriebehalters oder des Getriebegehäuses, jeweils als eine Aufnahmetasche zur Aufnahme jeweils eines der Bolzen ausgebildet. Die Aufnahmetaschen weisen jeweils eine Einführungsöffnung und eine Lagerungsöffnung auf. Die Bolzen sind jeweils derart ausgebildet, dass sie in einer Montageausrichtung des Getriebegehäuses zum Getriebehalter durch die jeweilige Einführungsöffnung hindurch und in die jeweilige Lagerungsöffnung einführbar sind und in der Lagerungsöffnung drehbar sind, wobei bei einer von der Montageausrichtung abweichenden Ausrichtung des Getriebegehäuses zum Getriebehalter, insbesondere bei mindestens einer Betriebsausrichtung des Getriebegehäuses, ein Durchführen des jeweiligen Bolzens durch die jeweilige Einführungsöffnung blockiert ist. Die Betriebsausrichtung ist eine von der Montageausrichtung abweichende Ausrichtung. Durch die schwenkbare Lagerung des Getriebegehäuses am Getriebehalter können mehrere solche Betriebsausrichtungen vorgesehen sein. Diese Betriebsausrichtungen ergeben sich insbesondere durch ein Verstellen eines mittels der Spindelantriebsanordnung verstellbaren Bauteils, insbesondere des Fahrzeugsitzes, beispielsweise durch eine Höhenverstellung des Fahrzeugsitzes. Dabei ergeben sich von einer Maximalverstellposition zu einer entgegengesetzten Maximalverstellposition, beispielsweise von einer tiefsten zu einer höchsten Position des höhenverstellbaren Fahrzeugsitzes, entsprechend mehrere Betriebsausrichtungen. Die Montageausrichtung wird dabei zweckmäßigerweise nicht erreicht, so dass ein ungewolltes Demontieren von Getriebehalter und Getriebegehäuse während dieser Verstellung ausgeschlossen ist.

Die jeweilige Einführungsöffnung ist insbesondere schlitzförmig ausgebildet. Die jeweilige Lagerungsöffnung ist insbesondere rund ausgebildet, d. h. sie weist einen runden Querschnitt auf. Der jeweilige Bolzen ist insbesondere stegförmig ausgebildet. Erweist insbesondere einen unrunden Querschnitt auf, beispielsweise einen ovalen, elliptischen oder rechteckigen Querschnitt, vorteilhafterweise mit abgerundeten Ecken. Insbesondere ist der jeweilige Bolzen derart ausgebildet, dass eine Länge seines Querschnitts größer ist als eine Breite seines Querschnitts. Dabei ist die Breite des Querschnitts des jeweiligen Bolzens kleiner als eine Breite der jeweiligen Einführungsöffnung und die Länge des Querschnitts des jeweiligen Bolzens ist größer als die Breite der jeweiligen Einführungsöffnung und korrespondiert vorteilhafterweise mit einem Durchmesser der jeweiligen Lagerungsöffnung. Dadurch wird die oben beschriebene Situation erreicht, dass die Bolzen in der Montageausrichtung des Getriebegehäuses zum Getriebehalter durch die jeweilige Einführungsöffnung hindurch und in die jeweilige Lagerungsöffnung einführbar sind und in der Lagerungsöffnung drehbar sind, wobei bei einer von der Montageausrichtung abweichenden Ausrichtung des Getriebegehäuses zum Getriebehalter ein Durchführen des jeweiligen Bolzens durch die jeweilige Einführungsöffnung blockiert ist.

Durch die Bolzen, insbesondere durch deren mit dem Durchmesser der jeweiligen Lagerungsöffnung korrespondierender Länge ihres Querschnitts, wird eine relativ zum Getriebehalter drehbare Lagerung des Getriebegehäuses erreicht, wobei die in den Lagerungsöffnungen der Aufnahmetaschen angeordneten Bolzen eine Drehachse des Getriebegehäuses und somit auch eines Spindelantriebs der Spindelantriebsanordnung bilden.

Das Getriebegehäuse umfasst vorteilhafterweise einen Getriebedeckel. Vorteilhafterweise liegt im miteinander verbundenen Zustand des Getriebegehäuses und des Getriebehalters und einer von der Montageausrichtung abweichenden Ausrichtung des Getriebegehäuses zum Getriebehalter eine Außenseite des Getriebedeckels am Getriebehalter an und gleitet während Drehbewegungen des Getriebegehäuses relativ zum Getriebehalter am Getriebehalter entlang. Dadurch ist in Richtung einer Spindelachse der Gewindespindel keine feste Verbindung zwischen dem Getriebegehäuse und dem Getriebedeckel erforderlich, denn der Getriebedeckel stützt sich direkt am Getriebehalter ab und wird durch diesen in seiner Position im Getriebegehäuse gehalten. Insbesondere Betriebslasten und Lasten, welche bei Fahrzeugkollisionen auftreten, werden dadurch von der Gewindespindel über ein Schneckenrad eines das Getriebegehäuse umfassenden Getriebes und den Getriebedeckel direkt in den Getriebehalter abgeleitet, ohne das Getriebegehäuse zu belasten. Dadurch werden insbesondere die Verbindungselemente entlastet, da sie nicht in den beschriebenen Lastpfad eingebunden sind. Dadurch weisen diese einen geringeren Verschleiß auf und können geringer dimensioniert sein. Beispielsweise können sie aus Kunststoff ausgebildet sein.

Bei der hier beschriebenen Getriebeanordnung ist vorteilhafterweise, insbesondere in mindestens einer Betriebsausrichtung des Getriebegehäuses zum Getriebehalter, der Getriebehalter seitlich neben dem Getriebegehäuse angeordnet, insbesondere in Axialrichtung der Gewindespindel, insbesondere ausschließlich in dieser Axialrichtung der Gewindespindel, seitlich neben dem Getriebegehäuse angeordnet. D. h. das Getriebegehäuse ist nicht vom Getriebegehäuse umfangsseitig umschlossen, sondern Getriebegehäuse und Getriebegehäuse sind seitlich nebeneinander positioniert. Insbesondere ist der Getriebehalter im Bereich der Seite des Getriebegehäuses angeordnet, an welcher, insbesondere durch den Getriebedeckel hindurch, ein Ende der Gewindespindel herausragt, an dem eine Endstopphülse angeordnet ist. Insbesondere ist der Getriebehalter an einer von dem Ende der Gewindespindel, an welchem ein Befestigungselement angeordnet ist, abgewandten Seite des Getriebegehäuses angeordnet. Mittels dieses Befestigungselementes ist die Gewindespindel mit einem, insbesondere mittels der Spindelantriebsanordnung, insbesondere mittels des Spindelantriebs, zu verstellenden, Bauteil, insbesondere an einem Fahrzeugsitz, zu verbinden oder verbunden. Diese Verbindung wird somit nicht durch den Getriebehalter behindert, da dieser auf der anderen Seite des Getriebegehäuses angeordnet ist.

Insbesondere sind die Verbindungselemente des Getriebegehäuses und die Verbindungselemente des Getriebehalters, insbesondere in mindestens einer Betriebsausrichtung des Getriebegehäuses zum Getriebehalter, jeweils seitlich neben der Gewindespindel angeordnet, insbesondere in Radialrichtung der Gewindespindel seitlich neben der Gewindespindel. Es ist somit jeweils ein Verbindungselementpaar aus einem Verbindungselement des Getriebegehäuses und einem Verbindungselement des Getriebehalters auf die beschriebene Weise seitlich neben der Gewindespindel angeordnet, so dass die Gewindespindel zwischen diesen beiden Verbindungselementpaaren angeordnet ist. Auf diese Weise kann sie sich frei bewegen, insbesondere in ihrer Axialrichtung, und wird nicht durch die Verbindungselemente und den Getriebehalter behindert.

Die Verbindungselemente sind beispielsweise jeweils als Laschen, Beine oder Arme am Getriebehalter bzw. Getriebegehäuse ausgebildet, wobei die derart ausgebildeten Verbindungselemente am Getriebegehäuse seitlich voneinander beabstandet sind und, zweckmäßigerweise korrespondierend dazu, auch die derart ausgebildeten Verbindungselemente am Getriebehalter seitlich voneinander beabstandet sind, so dass dazwischen ein Freiraum zur Anordnung der Gewindespindel geschaffen ist.

Die Verbindungselemente des Getriebegehäuses sind beispielsweise, insbesondere beidseits, an Laschen des Getriebegehäuses ausgebildet, insbesondere beidseitig an der jeweiligen Lasche, d. h. von einer auf der jeweiligen anderen Lasche zugewandten Innenseite und von einer von der jeweiligen anderen Lasche abgewandten Außenseite der jeweiligen Lasche abragend ausgebildet. Die beiden Laschen sind, zumindest im Wesentlichen, parallel zueinander ausgerichtet und voneinander beabstandet, so dass dazwischen ein Freiraum für die Gewindespindel vorhanden ist.

Der Getriebehalter ist im Bereich seiner vorteilhafterweise als Aufnahmetaschen ausgebildeten Verbindungselemente insbesondere doppelwandig ausgebildet, so dass die Laschen zwischen jeweiliger Außenwand und Innenwand des Getriebehalters angeordnet werden können bzw. angeordnet sind. Dadurch sind Getriebegehäuse und Getriebehalter seitlich zueinander fixiert, beispielsweise ohne Spiel oder mit einem vorgegebenen, insbesondere geringen, Spiel, und es wird insbesondere ein seitliches Ausrasten der Verbindungselemente beispielsweise bei einer seitlichen Krafteinwirkung, verhindert.

Die Getriebeanordnung umfasst vorteilhafterweise nicht nur den Getriebehalter und das Getriebegehäuse, sondern das gesamte Getriebe, d. h. auch im Getriebegehäuse angeordnete Getriebekomponenten, insbesondere das Schneckenrad und Lagerscheiben.

Die Aufgabe wird des Weiteren erfindungsgemäß durch eine Spindelantriebsanordnung gelöst, welche die beschriebene Getriebeanordnung umfasst. Diese Spindelantriebsanordnung umfasst vorteilhafterweise des Weiteren einen Elektromotor und/oder die Gewindespindel.

Die Aufgabe wird des Weiteren erfindungsgemäß durch einen Fahrzeugsitz gelöst, welcher mindestens den Getriebehalter der beschriebenen Getriebeanordnung umfasst. Vorteilhafterweise umfasst der Fahrzeugsitz die beschriebene Getriebeanordnung, bevorzugt die beschriebene Spindelantriebsanordnung.

Die mit der Erfindung erzielten Vorteile bestehen insbesondere darin, dass es ermöglicht wird, das Getriebe als eine Kernstandardeinheit zu fertigen, indem das Getriebegehäuse mit allen erforderlichen Getriebekomponenten, insbesondere mit dem Schneckenrad und den Lagerscheiben, bestückt wird und durch Anordnen des Getriebedeckels am Getriebegehäuse, insbesondere durch dessen Einpressen in das Getriebegehäuse, verschlossen wird. Anschließend können entsprechend jeweiligen Erfordernissen eine jeweilige Variante des Elektromotors und eine jeweilige Variante der Gewindespindel mit dem Getriebe gekoppelt werden. Dadurch kann mit dieser Kernstandardeinheit ein Spindelantrieb ausgebildet werden, der an jeweilige Erfordernisse angepasst ist. Anschließend wird dieser Spindelantrieb mit dem Getriebeträger verbunden, indem das Getriebegehäuse auf die oben beschriebene Weise mit dem Getriebeträger verbunden wird. Dabei kann der Getriebeträger bereits an dem anderen Bauteil, insbesondere an dem Fahrzeugsitz, befestigt sein oder erst anschließend, d. h. mit bereits verbundenem Spindelantrieb, an diesem anderen Bauteil, insbesondere an dem Fahrzeugsitz, befestigt werden. Durch die unterschiedlich ausgerichteten Aufnahmeöffnungen für die Befestigungsschrauben oder Befestigungsbolzen kann der Getriebeträger und über diesen der Spindelantrieb in einer jeweils erforderlichen Ausrichtung an der jeweiligen Variante des Fahrzeugsitzes befestigt werden, beispielsweise in y-Richtung oder z-Richtung des Fahrzeugsitzes ausgerichtet.

Alternativ zu dieser Verbindung des Getriebes mit dem Getriebeträger erst nach der Kopplung des Getriebes mit dem Elektromotor und der Gewindespindel kann beispielsweise zunächst eine Kernstandardvormontagegruppe aus Getriebe und Getriebeträger ausgebildet werden, indem zunächst das Getriebe auf die oben beschriebene Weise als Kernstandardeinheit gefertigt wird, indem das Getriebegehäuse mit allen erforderlichen Getriebekomponenten, insbesondere mit dem Schneckenrad und den Lagerscheiben, bestückt wird und durch Anordnen des Getriebedeckels am Getriebegehäuse, insbesondere durch dessen Einpressen in das Getriebegehäuse, verschlossen wird, und anschließend dieses Getriebe mit dem Getriebeträger auf die beschriebene Weise verbunden wird. Diese Kernstandardvormontagegruppe ist für alle Varianten gleich und kann dann je nach Erfordernissen der jeweiligen Variante mit einer jeweiligen Variante des Elektromotors und einer jeweiligen Variante der Gewindespindel gekoppelt werden und, vor oder nach dieser Kopplung mit dem Elektromotor und der Gewindespindel, mittels des Getriebeträgers am anderen Bauteil, insbesondere an dem Fahrzeugsitz, befestigt werden.

Durch die erfindungsgemäße Lösung wird insbesondere eine Vereinfachung der Montage, eine Reduzierung einer Teileanzahl, eine Kostenreduzierung und eine Variantenflexibilität erreicht.

Insbesondere durch die beschriebene Ausgestaltung des Getriebehalters und des Getriebegehäuses wird des Weiteren, insbesondere im Vergleich mit einem käfigförmig das Getriebegehäuse umschließenden Getriebehalter, eine Geräuschreduzierung erreicht, insbesondere eine Reduzierung eines Auslaufgeräuschs bei einem Erreichen eines Endanschlags des Spindelantriebs und eine Reduzierung von durch Lastwechseleinwirkungen erzeugten Geräuschen. Des Weiteren wird eine Leistungsfähigkeit über einen Lebenszyklus, eine Spielfreiheit und eine Fähigkeit zum Bewältigen von Endanschlägen des Spindelantriebs verbessert. Durch die beschriebene drehbare Lagerung des Getriebegehäuses bezüglich des Getriebehalters werden zudem ein größerer Drehwinkel und dadurch beispielsweise eine größere Sitzhöhenverstellung des Fahrzeugsitzes ermöglicht. Insbesondere durch die Ableitung von bei Fahrzeugkollisionen auftretenden Lasten über den Getriebedeckel direkt in den Getriebehalter und die dadurch erreichte Entlastung der Verbindungselemente wird des Weiteren eine Kollisionssicherheit verbessert.

### Figuren und Ausführungsformen der Erfindung

Im Folgenden ist die Erfindung anhand von in den Figuren 1 und 2 dargestellten und aus dem Stand der Technik bekannten Getriebeanordnungen und eines in den Figuren 3 bis 9 dargestellten vorteilhaften Ausführungsbeispiels näher erläutert. Die Erfindung ist jedoch nicht auf dieses Ausführungsbeispiel beschränkt. Es zeigen:

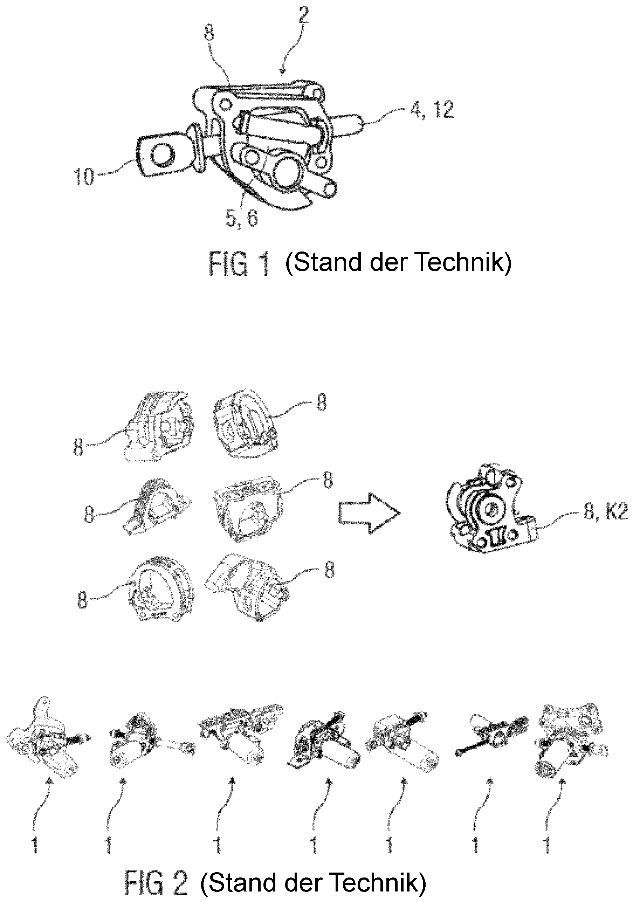

- Figur 1: schematisch eine perspektivische Darstellung einer Getriebeanordnung für eine Spindelantriebsanordnung nach dem Stand der Technik,
- Figur 2: schematisch eine Übersicht einer Mehrzahl aus dem Stand der Technik bekannter Getriebehalter und damit ausgebildeter Spindelantriebsanordnungen im Vergleich zu einem demgegenüber verbesserten Getriebehalter,

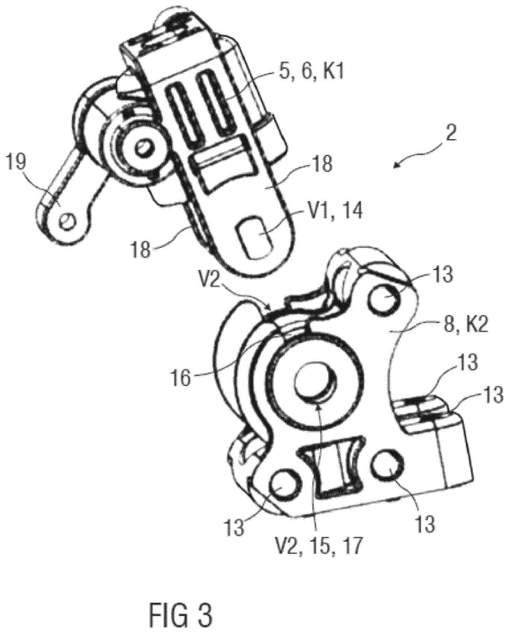

- Figur 3: schematisch ein Montageschritt zur Montage einer Getriebeanordnung für eine Spindelantriebsanordnung,

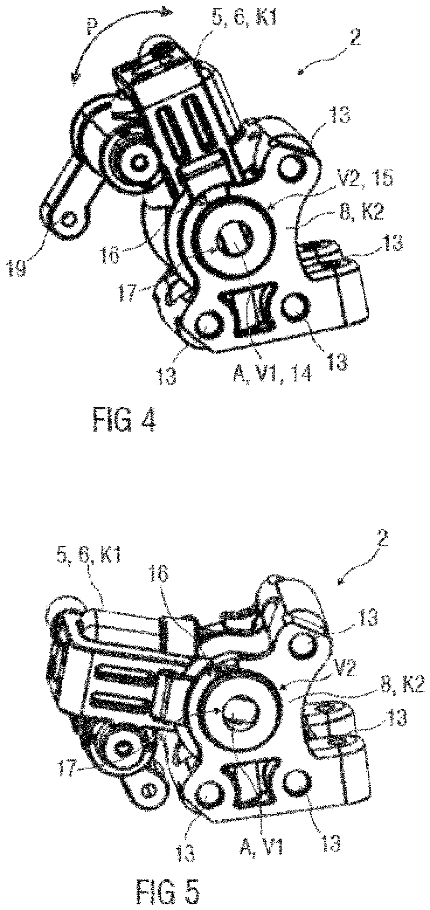

- Figur 4: schematisch ein weiterer Montageschritt zur Montage einer Getriebeanordnung für eine Spindelantriebsanordnung,
- Figur 5: schematisch ein weiterer Montageschritt zur Montage einer Getriebeanordnung für eine Spindelantriebsanordnung,

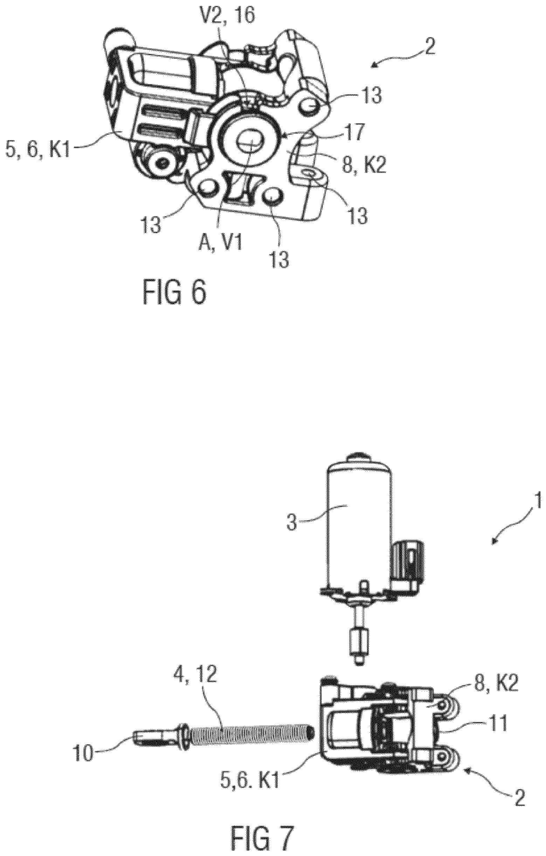

- Figur 6: schematisch eine perspektivische Darstellung einer Getriebeanordnung für eine Spindelantriebsanordnung,
- Figur 7: schematisch eine Teilexplosionsdarstellung einer Spindelantriebsanordnung,

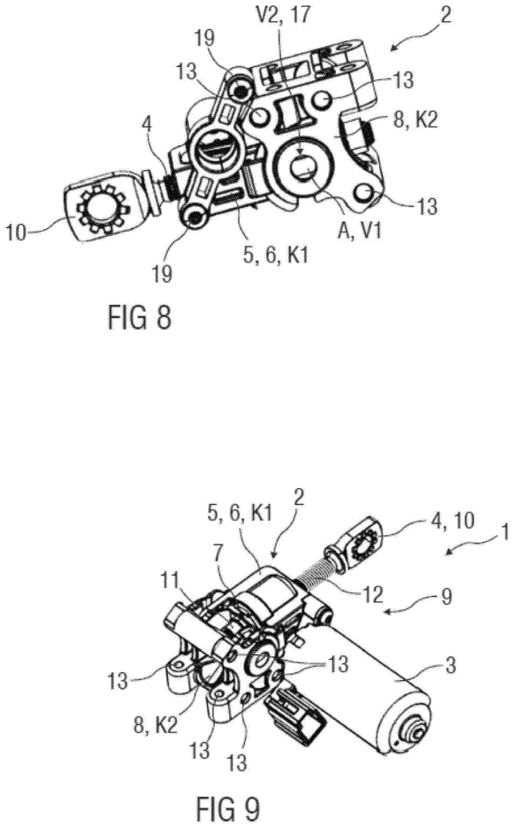

- Figur 8: schematisch eine perspektivische Darstellung einer Getriebeanordnung mit darin angeordneter Gewindespindel für eine Spindelantriebsanordnung, und
- Figur 9: schematisch eine perspektivische Darstellung einer Spindelantriebsanordnung.

Einander entsprechende Teile sind in allen Figuren mit den gleichen Bezugszeichen versehen.

Anhand der Figuren 1 bis 9 wird im Folgenden eine Spindelantriebsanordnung 1 beschrieben, welche beispielsweise für einen Verstellmechanismus eines hier nicht dargestellten Fahrzeugs vorgesehen ist, zum Beispiel für eine elektrische Höhenverstellung eines hier nicht dargestellten Fahrzeugsitzes des Fahrzeugs.

Die Spindelantriebsanordnung 1 umfasst eine Getriebeanordnung 2, einen Elektromotor 3 und eine Gewindespindel 4. Die Getriebeanordnung 2 umfasst ein Getriebe 5, welches ein Getriebegehäuse 6 mit einem Getriebedeckel 7 und im Getriebegehäuse 6 angeordnete Getriebekomponenten, insbesondere ein Schneckenrad und Lagerscheiben, umfasst, und einen Getriebehalter 8 zur Befestigung der Spindelantriebsanordnung 1 an einem anderen Bauteil, insbesondere am Fahrzeugsitz. Das Getriebe 5, die Gewindespindel 4 und der Elektromotor 3 bilden einen Spindelantrieb 9 der Spindelantriebsanordnung 1.

Der Elektromotor 3 ist über das Getriebe 5, insbesondere über dessen Schneckenrad, mit der Gewindespindel 4 gekoppelt. Über das Getriebe 5, zweckmäßigerweise über dessen Schneckenrad, ist eine Drehbewegung des Elektromotors 3 auf die Gewindespindel 4 übertragbar. Durch die Spindelantriebsanordnung 1 ist es somit ermöglicht, eine rotatorische Bewegung des Elektromotors 3 über das Getriebe 5 in eine translatorische Bewegung der Gewindespindel 4 umzuwandeln.

Wird die Spindelantriebsanordnung 1 zur Höhenverstellung des Fahrzeugsitzes verwendet, so ist zweckmäßigerweise die Spindelantriebsanordnung 1 mittels des Getriebehalters 8 an einem Teil des Fahrzeugsitzes und ein Ende der Gewindespindel 4 an einem relativ dazu beweglichen Teil des Fahrzeugsitzes befestigt, beispielsweise an jeweils einem Gestellteil des Fahrzeugsitzes. Zweckmäßigerweise weist dieses Ende der Gewindespindel 4 hierzu ein Befestigungselement 10 auf, welches zum Beispiel in Form einer Befestigungsöse ausgebildet ist. Um ein Herausdrehen des anderen Endes der Gewindespindel 4 aus dem Getriebe 5 zu verhindern, ist zudem eine Endstopphülse 11 vorgesehen.

In den hier dargestellten Ausführungsbeispielen ist vorgesehen, dass die Gewindespindel 4 als eine sich nicht drehende Gewindespindel 4 ausgebildet ist, d. h. das Getriebe 5 wirkt aufgrund einer Drehbewegung des Elektromotors 3, zweckmäßigerweise über das Schneckenrad, derart auf ein Gewinde 12 der Gewindespindel 4 ein, dass diese eine translatorische Bewegung in Richtung ihrer Längsachse ausführt, wobei sich die Gewindespindel 4 nicht um ihre Längsachse dreht. Dabei führt eine Drehbewegung des Elektromotors 3 in eine Drehrichtung zu einer translatorischen Bewegung der Gewindespindel 4 in eine Richtung und eine Drehbewegung des Elektromotors 3 in die Gegendrehrichtung führt zu einer entsprechenden translatorischen Bewegung der Gewindespindel 4 in die Gegenrichtung, d. h. die Gewindespindel 4 bewegt sich, je nach Drehrichtung des Elektromotors 3, vor oder zurück. Durch eine entsprechende Kopplung mit dem Fahrzeugsitz resultiert daraus bei einer Verwendung der Spindelantriebsanordnung 1 in einem Verstellmechanismus zur elektrischen Höhenverstellung des Fahrzeugsitzes eine entsprechende Höhenveränderung des Fahrzeugsitzes.

Bei einem derartigen Verstellmechanismus ist es vorgesehen, die Spindelantriebsanordnung 1 derart am Fahrzeugsitz zu lagern, dass der Spindelantrieb 9 um eine Drehachse A drehbar und/oder schwenkbar gelagert ist, zweckmäßigerweise am Fahrzeugsitz und/oder an einem Gestell des Fahrzeugsitzes, über welches der Fahrzeugsitz am Fahrzeug befestigt oder befestigbar ist und welches zweckmäßigerweise ein Bestandteil des Verstellmechanismus ist. Die Schwenk- und/oder Drehbewegung des Spindelantriebs 9 resultiert aus der Höhenveränderung des Fahrzeugsitzes und damit des daran angeordneten Endes der Gewindespindel 4, während der Spindelantrieb 9 über die Drehachse A an dem Teil des Fahrzeugsitzes, zweckmäßigerweise des Gestells, gelagert ist, welcher diese Höhenänderung nicht mitmacht oder in anderem Ausmaß vollzieht. Auch eine umgekehrte Anordnung des Endes der Gewindespindel 4 und des Spindelantriebs 9 über die Drehachse A ist möglich. Die Drehachse A, auch als Rotationsachse oder Schwenkachse bezeichnet, ist bei einem im Fahrzeug angeordneten Fahrzeugsitz, welcher in Fahrtrichtung oder entgegen der Fahrtrichtung ausgerichtet ist, zweckmäßigerweise parallel zu einer Y-Achse des Fahrzeugs, d. h. parallel zu einer Querachse des Fahrzeugs, ausgerichtet.

Die in Figur 1 dargestellte aus dem Stand der Technik bekannte Getriebeanordnung 2 ist als eine Getriebeanordnung 2 für eine so genannte Käfig-Spindelantriebsanordnung ausgebildet. Der Getriebehalter 8 ist zur Halterung des Getriebes 5 und seines Getriebegehäuse 6 als ein Käfig ausgebildet. Darüber hinaus wird der Getriebehalter 8 zur Halterung des Spindelantriebs 9 und somit der gesamten Spindelantriebsanordnung 1 am Fahrzeugsitz verwendet.

Nachteilig hierbei ist, dass bei verschiedenen Varianten von Fahrzeugsitzen und bei verschiedenen Varianten von Elektromotoren 3 und Gewindespindeln 4, wobei diese Varianten beispielsweise eine unterschiedlich ausgerichtete Befestigung der Spindelantriebsanordnung 1 am Fahrzeugsitz erfordern können, eine entsprechende Variantenvielfalt an Getriebehaltern 8 erforderlich ist, wie beispielhaft in Figur 2 gezeigt.

Auf der linken Seite von Figur 2 sind sechs verschiedene Variantenbeispiele von Getriebehaltern 8 dargestellt. In Figur 2 unten ist eine Variantenvielfalt von Spindelantriebsanordnungen 1 dargestellt, für die im Stand der Technik die unterschiedlichen Getriebehalter 8 erforderlich sind. Mit der im Folgenden beschriebenen Lösung wird es ermöglicht, die Variantenvielfalt bezüglich der Getriebehalter 8 zu vermeiden und eine einzige Variante des Getriebehalters 8, beispielhaft dargestellt in Figur 2 rechts, für die verschiedenen Varianten der Spindelantriebsanordnung 1 verwenden zu können.

Um dies zu ermöglichen, weist der Getriebehalter 8 der in den Figuren 3 bis 9 näher dargestellten Getriebeanordnung 2 mindestens zwei Aufnahmeöffnungen 13 für jeweils eine Befestigungsschraube oder jeweils einen Befestigungsbolzen zur Befestigung an einem anderen Bauteil, insbesondere am Fahrzeugsitz, auf, wobei diese mindestens zwei Aufnahmeöffnungen 13 vorteilhafterweise rechtwinklig und/oder schräg zueinander ausgerichtet sind, d. h. insbesondere nicht parallel zueinander ausgerichtet sind, sondern insbesondere in einem Winkel zueinander ausgerichtet sind, welcher größer ist als 0° und bis zu 90° betragen kann, insbesondere 90° beträgt.

Im dargestellten Beispiel sind zwei Gruppen solcher Aufnahmeöffnungen 13 vorgesehen, d. h. die Aufnahmeöffnungen 13 der einen Gruppe sind vorteilhafterweise rechtwinklig und/oder schräg zu den Aufnahmeöffnungen 13 der anderen Gruppe ausgerichtet, d. h. insbesondere nicht parallel, sondern insbesondere in einem Winkel zueinander ausgerichtet, welcher größer ist als 0° und bis zu 90° betragen kann, insbesondere 90° beträgt. Im dargestellten Beispiel beträgt dieser Winkel 90°, d. h. die Aufnahmeöffnungen 13 der einen Gruppe sind rechtwinklig zu den Aufnahmeöffnungen 13 der anderen Gruppe ausgerichtet.

Dadurch wird es ermöglicht, den Getriebehalter 8 in zwei verschiedenen Ausrichtungen, beispielsweise entweder horizontal oder vertikal ausgerichtet, am anderen Bauteil, insbesondere am Fahrzeugsitz, zu befestigen. Somit kann dieser Getriebehalter 8 für verschiedene Varianten von Fahrzeugsitzen und/oder für verschiedene Varianten der Spindelantriebsanordnung 1, welche sich beispielsweise in einem jeweils verwendeten Elektromotor 3 für die Spindelantriebsanordnung 1 und/oder in einer jeweils verwendeten Gewindespindel 4 für die Spindelantriebsanordnung 1 unterscheiden, verwendet werden. Es sind somit nicht für jede dieser Varianten der Spindelantriebsanordnung 1 und/oder für jede dieser Varianten des Fahrzeugsitzes separat und spezifisch ausgebildete Getriebehalter 8 erforderlich.

Die Getriebeanordnung 2 umfasst als Komponenten K1, K2 mindestens das Getriebegehäuse 6 und den Getriebehalter 8. Diese beiden Komponenten K1, K2 weisen korrespondierende Verbindungselemente V1, V2 zur Verbindung des Getriebegehäuses 6 mit dem Getriebehalter 8 auf. Im dargestellten Beispiel sind die Verbindungselemente V1 des als erste Komponente K1 ausgebildeten Getriebegehäuses 6 jeweils als ein Bolzen 14 und die Verbindungselemente V2 des als zweite Komponente K2 ausgebildeten Getriebehalters 8 jeweils als eine Aufnahmetasche 15 zur Aufnahme jeweils eines der Bolzen 14 ausgebildet. In anderen Ausführungsbeispielen kann dies auch umgekehrt sein.

Die Aufnahmetaschen 15 weisen jeweils eine Einführungsöffnung 16 und eine Lagerungsöffnung 17 auf. Die als Bolzen 14 ausgebildeten ersten Verbindungselemente V1, welche hier seitlich abstehend am als erste Komponente K1 ausgebildeten Getriebegehäuse 6 ausgebildet sind, sind jeweils derart ausgebildet, dass sie in einer Montageausrichtung des Getriebegehäuses 6 zum Getriebehalter 8 durch die jeweilige Einführungsöffnung 16 hindurch und in die jeweilige Lagerungsöffnung 17 einführbar sind, wie in den Figuren 3 und 4 in zwei aufeinanderfolgenden Montageschritten der Montage des Getriebegehäuses 6, insbesondere des Getriebes 5, am Getriebehalter 8 gezeigt, und in der Lagerungsöffnung 17 drehbar sind, wobei bei einer von der Montageausrichtung abweichenden Ausrichtung des Getriebegehäuses 6, insbesondere des Getriebes 5, zum Getriebehalter 8, insbesondere bei mindestens einer Betriebsausrichtung des Getriebegehäuses 6, insbesondere des Getriebes 5, ein Durchführen des jeweiligen Bolzens 14 durch die jeweilige Einführungsöffnung 16 blockiert ist, wie in Figur 5 gezeigt.

Die Verbindung des Getriebegehäuses 6 und somit des Getriebes 5 mit dem Getriebehalter 8 erfolgt durch die in den Figuren 3 bis 5 gezeigte Montage. Getriebegehäuse 6 und Getriebehalter 8 werden zunächst in die Montageausrichtung zueinander gebracht, wie in Figur 3 gezeigt. Dann werden die Bolzen 14 in die Aufnahmetaschen 15 eingeführt, indem sie durch die Einführungsöffnungen 16 hindurchgeführt werden, bis sie in der jeweiligen Lagerungsöffnung 17 angekommen sind, wie in Figur 4 gezeigt. Anschließend werden das Getriebegehäuse 6 und der Getriebehalter 8 relativ zueinander um die Drehachse A verdreht, wie in Figur 4 anhand eines Schwenkpfeils P gezeigt. Beispielsweise wird das Getriebegehäuse 6 in die Betriebsausrichtung gebracht, wie in Figur 5 gezeigt. Somit ist das Durchführen des jeweiligen Bolzens 14 durch die jeweilige Einführungsöffnung 16 blockiert.

Die jeweilige Einführungsöffnung 16 ist insbesondere schlitzförmig ausgebildet. Die jeweilige Lagerungsöffnung 17 ist insbesondere rund ausgebildet, d. h. sie weist einen runden Querschnitt auf. Der jeweilige Bolzen 14 ist insbesondere stegförmig ausgebildet. Er weist insbesondere einen unrunden Querschnitt auf, beispielsweise einen ovalen, elliptischen oder rechteckigen Querschnitt, vorteilhafterweise mit abgerundeten Ecken. Insbesondere ist der jeweilige Bolzen 14 derart ausgebildet, dass eine Länge seines Querschnitts größer ist als eine Breite seines Querschnitts. Dabei ist die Breite des Querschnitts des jeweiligen Bolzens 14 kleiner als eine Breite der jeweiligen Einführungsöffnung 16 und die Länge des Querschnitts des jeweiligen Bolzens 14 ist größer als die Breite der jeweiligen Einführungsöffnung 16 und korrespondiert vorteilhafterweise mit einem Durchmesser der jeweiligen Lagerungsöffnung 17. Dadurch wird die oben beschriebene Situation erreicht, dass die Bolzen 14 in der Montageausrichtung des Getriebegehäuses 6 zum Getriebehalter 8 durch die jeweilige Einführungsöffnung 16 hindurch und in die jeweilige Lagerungsöffnung 17 einführbar sind und in der Lagerungsöffnung 17 drehbar sind, wobei bei einer von der Montageausrichtung abweichenden Ausrichtung des Getriebegehäuses 6 zum Getriebehalter 8 ein Durchführen des jeweiligen Bolzens 14 durch die jeweilige Einführungsöffnung 16 blockiert ist. Durch die Bolzen 14, insbesondere durch deren mit dem Durchmesser der jeweiligen Lagerungsöffnung 17 korrespondierender Länge ihres Querschnitts, wird eine relativ zum Getriebehalter 8 drehbare Lagerung des Getriebegehäuses 6 erreicht, wobei die in den Lagerungsöffnungen 17 der Aufnahmetaschen 15 angeordneten Bolzen 14 die Drehachse A des Getriebegehäuses 6 und somit auch des Spindelantriebs 9 der Spindelantriebsanordnung 1 bilden.

Im dargestellten Beispiel sind die als Bolzen 14 ausgebildeten ersten Verbindungselemente V1 beidseits an Laschen 18 des als erste Komponente K1 ausgebildeten Getriebegehäuses 6 ausgebildet, insbesondere beidseitig an der jeweiligen Lasche 18, d. h. von einer auf der jeweiligen anderen Lasche 18 zugewandten Innenseite und von einer von der jeweiligen anderen Lasche 18 abgewandten Außenseite der jeweiligen Lasche 18 abragend ausgebildet. Die beiden Laschen 18 sind, zumindest im Wesentlichen, parallel zueinander ausgerichtet. Der als zweite Komponente K2 ausgebildete Getriebehalter 8 ist im Bereich der als zweite Verbindungselemente V2 ausgebildeten Aufnahmetaschen 15 doppelwandig ausgebildet, so dass die Laschen 18 zwischen jeweiliger Außenwand und Innenwand des Getriebehalters 8 angeordnet werden können, wie in Figur 3 gezeigt, bzw. angeordnet sind, wie in den Figuren 4 bis 9 gezeigt. Dadurch sind Getriebegehäuse 6 und Getriebehalter 8 seitlich zueinander fixiert, beispielsweise ohne Spiel oder mit einem vorgegebenen, insbesondere geringen, Spiel, und es wird insbesondere ein seitliches Ausrasten der Verbindungselemente V1, V2, beispielsweise bei einer seitlichen Krafteinwirkung, verhindert.

Das Getriebegehäuse 6 umfasst vorteilhafterweise den bereits erwähnten Getriebedeckel 7. Vorteilhafterweise liegt im miteinander verbundenen Zustand des Getriebegehäuses 6 und des Getriebehalters 8 und einer von der Montageausrichtung abweichenden Ausrichtung des Getriebegehäuses 6 zum Getriebehalter 8 eine Außenseite des Getriebedeckels 7 am Getriebehalter 8 an, wie in Figur 9 gezeigt, und gleitet während Schwenkbewegungen des Getriebegehäuses 6 relativ zum Getriebehalter 8 am Getriebehalter 8 entlang. Dies wird im dargestellten Beispiel durch einen abgerundeten Randbereich der Innenwand des im Bereich der Aufnahmetaschen 15 doppelwandig ausgebildeten Getriebehalters 8 realisiert, wobei der Getriebedeckel 7 während Schwenkbewegungen des Getriebegehäuses 6 relativ zum Getriebehalter 8 um die Drehachse A an diesen abgerundeten Randbereichen der beiden Innenwände entlanggleitet und somit durch diese Innenwände gehalten ist.

Dadurch ist in Richtung einer Spindelachse der Gewindespindel 4, insbesondere in Richtung der Aufnahmetaschen 15 und somit der Innenwände des Getriebehalters 8, d. h. insbesondere vom Getriebegehäuse 6 weg, keine feste Verbindung zwischen dem Getriebegehäuse 6 und dem Getriebedeckel 7 erforderlich, denn der Getriebedeckel 7 stützt sich direkt am Getriebehalter 8 ab und wird durch diesen in seiner Position im Getriebegehäuse 6 gehalten. Er ist somit beispielsweise nur in das Getriebegehäuse 6 eingepresst, jedoch nicht fest mit diesem verbunden. Insbesondere Betriebslasten und Lasten, welche bei Fahrzeugkollisionen auftreten, werden dadurch von der Gewindespindel 4 über das Schneckenrad des das Getriebegehäuse 6 umfassenden Getriebes 5 und den Getriebedeckel 7 direkt in den Getriebehalter 8 abgeleitet, ohne das Getriebegehäuse 6 zu belasten, da der Getriebedeckel 7 nicht fest mit dem Getriebegehäuse 6 verbunden ist. Treten somit solche Lasten auf, ist der Getriebedeckel 7 bestrebt, sich aus dem Getriebegehäuse 6 herauszubewegen, d. h. er würde durch diese Lasten aus dem Getriebegehäuse 6 herausbewegt werden. Da er jedoch am Getriebehalter 8 anliegt und von diesem abgestützt wird, ist dies durch den Getriebehalter 8 verhindert. Die Lasten werden auf diese Weise vom Getriebedeckel 7 nicht in das Getriebegehäuse 6, sondern direkt in den Getriebehalter 8 eingeleitet.

Da diese Lasten somit nicht auf das Getriebegehäuse 6 einwirken, wirken sie auch nicht über das Getriebegehäuse 6 auf die ersten und zweiten Verbindungselemente V1, V2 ein. D. h. die Kraftweiterleitung solcher Lasten erfolgt nicht über diese Verbindungselemente V1, V2, insbesondere nicht über die Bolzen 14 und Lagerungsöffnungen 17 der Aufnahmetaschen 15, sondern über den Getriebedeckel 7 direkt in den Getriebehalter 8, insbesondere über dessen Innenwände. Dadurch werden insbesondere die Verbindungselemente V1, V2 entlastet, da sie nicht in den beschriebenen Lastpfad eingebunden sind. Dadurch weisen diese einen geringeren Verschleiß auf und können geringer dimensioniert sein. Beispielsweise können sie aus Kunststoff ausgebildet sein, da sie nur die Last des Spindelantriebs 9 tragen müssen, jedoch nicht die Belastungen des bewegten Bauteils, insbesondere des Fahrzeugsitzes, und darauf eventuell zusätzlich einwirkender Lasten, beispielsweise bei einer Kollision.

Die Getriebeanordnung 2 umfasst vorteilhafterweise nicht nur den Getriebehalter 8 und das Getriebegehäuse 6, sondern das gesamte Getriebe 5, d. h. auch die im Getriebegehäuse 6 angeordneten Getriebekomponenten, insbesondere das Schneckenrad und die Lagerscheiben.

Die mit der beschriebenen Lösung erzielten Vorteile bestehen insbesondere darin, dass es ermöglicht wird, das Getriebe 5 als eine Kernstandardeinheit zu fertigen, indem das Getriebegehäuse 6 mit allen erforderlichen Getriebekomponenten, insbesondere mit dem Schneckenrad und den Lagerscheiben, bestückt wird und durch Anordnen des Getriebedeckels 7 am Getriebegehäuse 6, insbesondere durch dessen Einpressen in das Getriebegehäuse 6, verschlossen wird. Anschließend können entsprechend jeweiligen Erfordernissen eine jeweilige Variante des Elektromotors 3 und eine jeweilige Variante der Gewindespindel 4 mit dem Getriebe 5 gekoppelt werden. Zur Befestigung des Elektromotors 3 weist das Getriebegehäuse 6 entsprechende Befestigungsaufnahmen 19 auf, welche beispielsweise als Gewindebohrungen für Befestigungsschrauben ausgebildet sind. Auf diese Weise kann mit dieser Kernstandardeinheit ein Spindelantrieb 9 ausgebildet werden, der an jeweilige Erfordernisse angepasst ist.

Anschließend wird dieser Spindelantrieb 9 mit dem Getriebeträger 8 verbunden, indem das Getriebegehäuse 6 auf die oben beschriebene Weise mit dem Getriebeträger 8 verbunden wird. Dabei kann der Getriebeträger 8 bereits an dem anderen Bauteil, insbesondere an dem Fahrzeugsitz, befestigt sein oder erst anschließend, d. h. mit bereits verbundenem Spindelantrieb 9, an diesem anderen Bauteil, insbesondere an dem Fahrzeugsitz, befestigt werden. Durch die unterschiedlich ausgerichteten Aufnahmeöffnungen 13 für die Befestigungsschrauben oder Befestigungsbolzen kann der Getriebeträger 8 und über diesen der Spindelantrieb 9 in einer jeweils erforderlichen Ausrichtung an der jeweiligen Variante des Fahrzeugsitzes befestigt werden, beispielsweise in y-Richtung oder z-Richtung des Fahrzeugsitzes ausgerichtet.

Alternativ zur oben beschriebenen Verbindung des Getriebes 5 mit dem Getriebeträger 8 erst nach der Kopplung des Getriebes 5 mit dem Elektromotor 3 und der Gewindespindel 4 kann beispielsweise zunächst eine Kernstandardvormontagegruppe aus Getriebe 5 und Getriebeträger 8 ausgebildet werden, indem zunächst das Getriebe 5 auf die oben beschriebene Weise als Kernstandardeinheit gefertigt wird, indem das Getriebegehäuse 6 mit allen erforderlichen Getriebekomponenten, insbesondere mit dem Schneckenrad und den Lagerscheiben, bestückt wird und durch Anordnen des Getriebedeckels 7 am Getriebegehäuse 6, insbesondere durch dessen Einpressen in das Getriebegehäuse 6, verschlossen wird, und anschließend dieses Getriebe 5 auf die in den Figuren 3 bis 5 dargestellte und oben beschriebene Weise mit dem Getriebeträger 8 verbunden wird. Diese Kernstandardvormontagegruppe ist für alle Varianten gleich und kann dann je nach Erfordernissen der jeweiligen Variante mit einer jeweiligen Variante des Elektromotors 3 und einer jeweiligen Variante der Gewindespindel 4 gekoppelt werden und, davor oder danach, mittels des Getriebeträgers 8 am anderen Bauteil, insbesondere an dem Fahrzeugsitz, befestigt werden.

### Bezugszeichenliste

- 1: Spindelantriebsanordnung
- 2: Getriebeanordnung
- 3: Elektromotor
- 4: Gewindespindel
- 5: Getriebe
- 6: Getriebegehäuse
- 7: Getriebedeckel
- 8: Getriebehalter
- 9: Spindelantrieb
- 10: Befestigungselement
- 11: Endstopphülse
- 12: Gewinde
- 13: Aufnahmeöffnung
- 14: Bolzen
- 15: Aufnahmetasche
- 16: Einführungsöffnung
- 17: Lagerungsöffnung
- 18: Lasche
- 19: Befestigungsaufnahme

- A: Drehachse
- K1: erste Komponente
- K2: zweite Komponente
- P: Schwenkpfeil
- V1: erstes Verbindungselement
- V2: zweites Verbindungselement

## Patentansprüche

1. Getriebeanordnung (2) für eine Spindelantriebsanordnung (1), umfassend ein Getriebegehäuse (6) und einen Getriebehalter (8), wobei der Getriebehalter (8) mindestens zwei Aufnahmeöffnungen (13) für jeweils eine Befestigungsschraube oder jeweils einen Befestigungsbolzen zur Befestigung an einem anderen Bauteil, insbesondere an einem Fahrzeugsitz, aufweist, und wobei diese mindestens zwei Aufnahmeöffnungen (13) rechtwinklig und/oder schräg zueinander ausgerichtet sind,
**dadurch gekennzeichnet, dass** das Getriebegehäuse (6) schwenkbar am Getriebehalter (8) gelagert ist.

2. Getriebeanordnung (2) nach Anspruch 1,
wobei das Getriebegehäuse (6) und der Getriebehalter (8) korrespondierende Verbindungselemente (V1, V2) zur Verbindung des Getriebegehäuses (6) mit dem Getriebehalter (8) aufweisen.

3. Getriebeanordnung (2) nach Anspruch 2,
wobei die Verbindungselemente (V1) des Getriebegehäuses (6) jeweils als ein Bolzen (14) und die Verbindungselemente (V2) des Getriebehalters (8) jeweils als eine Aufnahmetasche (15) zur Aufnahme jeweils eines der Bolzen (14) ausgebildet sind.

4. Getriebeanordnung (2) nach Anspruch 2,
wobei die die Verbindungselemente (V2) des Getriebehalters (8) jeweils als ein Bolzen (14) und die Verbindungselemente (V1) des Getriebegehäuses (6) jeweils als eine Aufnahmetasche (15) zur Aufnahme jeweils eines der Bolzen (14) ausgebildet sind.

5. Getriebeanordnung (2) nach Anspruch 3 oder 4,
wobei die Aufnahmetaschen (15) jeweils eine Einführungsöffnung (16) und eine Lagerungsöffnung (17) aufweisen, und die Bolzen (14) jeweils derart ausgebildet sind, dass sie in einer Montageausrichtung des Getriebegehäuses (6) zum Getriebehalter (8) durch die jeweilige Einführungsöffnung (16) hindurch und in die jeweilige Lagerungsöffnung (17) einführbar und in der Lagerungsöffnung (17) drehbar sind, wobei bei einer von der Montageausrichtung abweichenden Ausrichtung des Getriebegehäuses (6) zum Getriebehalter (8), insbesondere bei mindestens einer Betriebsausrichtung des Getriebegehäuses (6), ein Durchführen des jeweiligen Bolzens (14) durch die jeweilige Einführungsöffnung (16) blockiert ist.

6. Getriebeanordnung (2) nach Anspruch 5,
wobei die jeweilige Einführungsöffnung (16) schlitzförmig ausgebildet ist, die jeweilige Lagerungsöffnung (17) rund ausgebildet ist und der jeweilige Bolzen (14) stegförmig ausgebildet ist.

7. Getriebeanordnung (2) nach Anspruch 6,
wobei der jeweilige Bolzen (14) derart ausgebildet ist, dass eine Länge seines Querschnitts größer ist als eine Breite seines Querschnitts ist, wobei die Breite des Querschnitts des jeweiligen Bolzens (14) kleiner ist als eine Breite der jeweiligen Einführungsöffnung (16).

8. Getriebeanordnung (2) nach Anspruch 7,
wobei die Länge des Querschnitts des jeweiligen Bolzens (14) größer ist als die Breite der jeweiligen Einführungsöffnung (16), und insbesondere die Länge des Querschnitts des jeweiligen Bolzens (14) mit einem Durchmesser der jeweiligen Lagerungsöffnung (17) korrespondiert.

9. Getriebeanordnung (2) nach einem der vorhergehenden Ansprüche, wobei das Getriebegehäuse (6) einen Getriebedeckel (7) mit einer Öffnung zur Durchführung einer Gewindespindel (4) umfasst.

10. Getriebeanordnung (2) nach einem der vorhergehenden Ansprüche, wobei im miteinander verbundenen Zustand des Getriebegehäuses (6) und des Getriebehalters (8) und einer von der Montageausrichtung abweichenden Ausrichtung des Getriebegehäuses (6) zum Getriebehalter (8) eine Außenseite des Getriebedeckels (7) am Getriebehalter (8) anliegt und während Drehbewegungen des Getriebegehäuses (6) relativ zum Getriebehalter (8) am Getriebehalter (8) entlanggleitet.

11. Getriebeanordnung (2) nach Anspruch 10,
wobei, insbesondere in mindestens einer Betriebsausrichtung des Getriebegehäuses (6) zum Getriebehalter (8), der Getriebehalter (8) seitlich neben dem Getriebegehäuse (6) angeordnet ist, insbesondere in Axialrichtung der Gewindespindel (4), insbesondere ausschließlich in dieser Axialrichtung der Gewindespindel (4), seitlich neben dem Getriebegehäuse (6).

12. Getriebeanordnung (2) nach einem der vorhergehenden Ansprüche, wobei die Verbindungselemente (V1) des Getriebegehäuses (6) und die Verbindungselemente (V2) des Getriebehalters (8), insbesondere in mindestens einer Betriebsausrichtung des Getriebegehäuses (6) zum Getriebehalter (8), jeweils seitlich neben der Gewindespindel (4) angeordnet sind.

13. Getriebeanordnung (2) nach Anspruch 12,
wobei die Verbindungselemente (V1) des Getriebegehäuses (6) und die Verbindungselemente (V2) des Getriebehalters (8) in Radialrichtung der Gewindespindel (4) seitlich neben der Gewindespindel (4) angeordnet sind.

14. Spindelantriebsanordnung (1), umfassend eine Getriebeanordnung (2) nach einem der vorhergehenden Ansprüche.

15. Fahrzeugsitz, umfassend eine Spindelantriebsanordnung (1) nach Anspruch 14.

## Claims

1. Gear arrangement (2) for a spindle drive arrangement (1),comprising a gear housing (6) and a gear holder (8), the gear holder (8) having at least two receiving openings (13) for in each case one fastening screw or in each case one fastening pin for fastening to another component, in particular to a vehicle seat, and these at least two receiving openings (13) being oriented at a right angle and/or obliquely with respect to one another, **characterized in that** the gear housing (6) is mounted pivotably on the gear holder (8).

2. Gear arrangement (2) according to Claim 1,
the gear housing (6) and the gear holder (8) having corresponding connecting elements (V1, V2) for connecting the gear housing (6) to the gear holder (8).

3. Gear arrangement (2) according to Claim 2, the connecting elements (V1) of the gear housing (6) being configured in each case as a pin (14), and the connecting elements (V2) of the gear holder (8) being configured in each case as a receiving pocket (15) for receiving in each case one of the pins (14).

4. Gear arrangement (2) according to Claim 2,
the connecting elements (V2) of the gear holder (8) being configured in each case as a pin (14), and the connecting elements (V1) of the gear housing (6) being configured in each case as a receiving pocket (15) for receiving in each case one of the pins (14).

5. Gear arrangement (2) according to Claim 3 or 4,the receiving pockets (15) in each case having an insertion opening (16) and a mounting opening (17), and the pins (14) being configured in each case in such a way that, in a mounting orientation of the gear housing (6) with respect to the gear holder (8), they can be inserted through the respective insertion opening (16) and into the respective mounting opening (17) and can be rotated in the mounting opening (17), an insertion of the respective pin (14) through the respective insertion opening (16) being blocked in the case of an orientation, differing from the mounting orientation, of the gear housing (6) with respect to the gear holder (8), in particular in the case of at least one operating orientation of the gear housing (6).

6. Gear arrangement (2) according to Claim 5, the respective insertion opening (16) being of slot-shaped configuration, the respective mounting opening (17) being of round configuration, and the respective pin (14) being of web-shaped configuration.

7. Gear arrangement (2) according to Claim 6, the respective pin (14) being configured in such a way that a length of its cross section is greater than a width of its cross section, the width of the cross section of the respective pin (14) being smaller than a width of the respective insertion opening (16).

8. Gear arrangement (2) according to Claim 7, the length of the cross section of the respective pin (14) being greater than the width of the respective insertion opening (16), and, in particular, the length of the cross section of the respective pin (14) corresponding to a diameter of the respective mounting opening (17).

9. Gear arrangement (2) according to one of the preceding claims, the gear housing (6) comprising a gear cover (7) with an opening for leading through a threaded spindle (4).

10. Gear arrangement (2) according to one of the preceding claims, an outer side of the gear cover (7) bearing against the gear holder (8) and sliding along on the gear holder (8) during rotational movements of the gear housing (6) relative to the gear holder (8) in that state of the gear housing (6) and the gear holder (8), in which they are connected to one another, and in the case of an orientation, differing from the mounting orientation, of the gear housing (6) with respect to the gear holder (8).

11. Gear arrangement (2) according to Claim 10,the gear holder (8), in particular in at least one operating orientation of the gear housing (6) with respect to the gear holder (8), being arranged laterally next to the gear housing (6), in particular being arranged laterally next to the gear housing (6) in the axial direction of the threaded spindle (4), in particular exclusively in this axial direction of the threaded spindle (4).

12. Gear arrangement (2) according to one of the preceding claims, the connecting elements (V1) of the gear housing (6) and the connecting elements (V2) of the gear holder (8) being arranged in each case laterally next to the threaded spindle (4), in particular in at least one operating orientation of the gear housing (6) with respect to the gear holder (8).

13. Gear arrangement (2) according to Claim 12, the connecting elements (V1) of the gear housing (6) and the connecting elements (V2) of the gear holder (8) being arranged laterally next to the threaded spindle (4) in the radial direction of the threaded spindle (4).

14. Spindle drive arrangement (1), comprising a gear arrangement (2) according to one of the preceding claims.

15. Vehicle seat, comprising a spindle drive arrangement (1) according to Claim 14.

## Revendications

1. Agencement d'engrenage (2) pour un agencement d'entraînement de broche (1), comprenant un carter d'engrenage (6) et un support d'engrenage (8), dans lequel le support d'engrenage (8) présente au moins deux ouvertures de réception (13) pour respectivement une vis de fixation ou respectivement un boulon de fixation servant à la fixation à un autre composant, en particulier à un siège de véhicule, et dans lequel ces au moins deux ouvertures de réception (13) sont orientées perpendiculairement et/ou de manière oblique les unes par rapport aux autres,
**caractérisé en ce que** le carter d'engrenage (6) est monté pivotant sur le support d'engrenage (8).

2. Agencement d'engrenage (2) selon la revendication 1,
dans lequel le carter d'engrenage (6) et le support d'engrenage (8) présentent des éléments de liaison correspondants (V1, V2) servant à la liaison du carter d'engrenage (6) au support d'engrenage (8).

3. Agencement d'engrenage (2) selon la revendication 2,
dans lequel les éléments de liaison (V1) du carter d'engrenage (6) sont réalisés respectivement sous la forme d'un boulon (14) et les éléments de liaison (V2) du support d'engrenage (8) sont réalisés respectivement sous la forme d'une cavité de réception (15) servant à la réception de l'un des boulons (14) respectivement.

4. Agencement d'engrenage (2) selon la revendication 2,
dans lequel les éléments de liaison (V2) du support d'engrenage (8) sont réalisés respectivement sous la forme d'un boulon (14) et les éléments de liaison (V1) du carter d'engrenage (6) sont réalisés respectivement sous la forme d'une cavité de réception (15) servant à la réception de l'un des boulons (14) respectivement.

5. Agencement d'engrenage (2) selon la revendication 3 ou 4,
dans lequel les cavités de réception (15) présentent respectivement une ouverture d'insertion (16) et une ouverture de montage (17), et les boulons (14) sont respectivement réalisés de telle sorte qu'ils peuvent être insérés à travers l'ouverture d'insertion respective (16) et dans l'ouverture de montage respective (17) et peuvent être entraînés en rotation dans l'ouverture de montage (17) dans une orientation de montage du carter d'engrenage (6) par rapport au support d'engrenage (8), dans lequel un passage du boulon respectif (14) à travers l'ouverture d'insertion respective (16) est bloqué dans le cas d'une orientation du carter d'engrenage (6) par rapport au support d'engrenage (8) qui diffère de l'orientation de montage, en particulier dans le cas d'au moins une orientation de fonctionnement du carter d'engrenage (6).

6. Agencement d'engrenage (2) selon la revendication 5,
dans lequel l'ouverture d'insertion respective (16) est réalisée en forme de fente, l'ouverture de montage respective (17) est réalisée de manière circulaire et le boulon respectif (14) est réalisé en forme de barre.

7. Agencement d'engrenage (2) selon la revendication 6,
dans lequel le boulon respectif (14) est réalisé de telle sorte qu'une longueur de sa section transversale est supérieure à une largeur de sa section transversale, dans lequel la largeur de la section transversale du boulon respectif (14) est inférieure à une largeur de l'ouverture d'insertion respective (16).

8. Agencement d'engrenage (2) selon la revendication 7,
dans lequel la longueur de la section transversale du boulon respectif (14) est supérieure à la largeur de l'ouverture d'insertion respective (16), et en particulier la longueur de la section transversale du boulon respectif (14) correspond à un diamètre de l'ouverture de montage respective (17).

9. Agencement d'engrenage (2) selon l'une des revendications précédentes, dans lequel le carter d'engrenage (6) comprend un couvercle d'engrenage (7) doté d'une ouverture servant au passage d'une broche filetée (4).

10. Agencement d'engrenage (2) selon l'une des revendications précédentes, dans lequel, dans l'état relié l'un à l'autre du carter d'engrenage (6) et du support d'engrenage (8) et d'une orientation du carter d'engrenage (6) par rapport au support d'engrenage (8) qui diffère de l'orientation de montage, un côté extérieur du couvercle d'engrenage (7) s'appuie sur le support d'engrenage (8) et, pendant des mouvements de rotation du carter d'engrenage (6) par rapport au support d'engrenage (8), glisse sur le support d'engrenage (8) le long de celui-ci.

11. Agencement d'engrenage (2) selon la revendication 10,
dans lequel, en particulier dans au moins une orientation de fonctionnement du carter d'engrenage (6) par rapport au support d'engrenage (8), le support d'engrenage (8) est disposé latéralement à côté du carter d'engrenage (6), en particulier dans la direction axiale de la broche filetée (4), en particulier exclusivement dans cette direction axiale de la broche filetée (4), latéralement à côté du carter d'engrenage (6).

12. Agencement d'engrenage (2) selon l'une des revendications précédentes, dans lequel les éléments de liaison (V1) du carter d'engrenage (6) et les éléments de liaison (V2) du support d'engrenage (8), en particulier dans au moins une orientation de fonctionnement du carter d'engrenage (6) par rapport au support d'engrenage (8), sont disposés respectivement latéralement à côté de la broche filetée (4).

13. Agencement d'engrenage (2) selon la revendication 12,
dans lequel les éléments de liaison (V1) du carter d'engrenage (6) et les éléments de liaison (V2) du support d'engrenage (8) sont disposés latéralement à côté de la broche filetée (4) dans la direction radiale de la broche filetée (4).

14. Agencement d'entraînement de broche (1), comprenant un agencement d'engrenage (2) selon l'une des revendications précédentes.

15. Siège de véhicule, comprenant un agencement d'entraînement de broche (1) selon la revendication 14.
